(19) Europäisches Patentamt
European Patent Office
Office européen des brevets

(11) **EP 4 455 347 A1**

(12) **EUROPEAN PATENT APPLICATION**
published in accordance with Art. 153(4) EPC

(43) Date of publication:
   **30.10.2024   Bulletin 2024/44**

(21) Application number: **22911833.6**

(22) Date of filing: **20.12.2022**

(51) International Patent Classification (IPC):
   **C22C 38/38** $^{(2006.01)}$        **C22C 38/20** $^{(2006.01)}$
   **C22C 38/28** $^{(2006.01)}$        **C22C 38/00** $^{(2006.01)}$
   **C21D 8/12** $^{(2006.01)}$         **C21D 9/46** $^{(2006.01)}$
   **H01F 1/147** $^{(2006.01)}$

(52) Cooperative Patent Classification (CPC):
   **C21D 8/12; C21D 9/46; C22C 38/00; C22C 38/20;
   C22C 38/28; C22C 38/38; H01F 1/147**

(86) International application number:
   **PCT/KR2022/020772**

(87) International publication number:
   **WO 2023/121200 (29.06.2023 Gazette 2023/26)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority:  **21.12.2021   KR 20210183660**

(71) Applicant: POSCO Co., Ltd
   **Pohang-si, Gyeongsangbuk-do 37859 (KR)**

(72) Inventors:
   • **KIM, Jae-Hoon**
     **Pohang-si, Gyeongsangbuk-do 37859 (KR)**
   • **SHIN, Su-Yong**
     **Pohang-si, Gyeongsangbuk-do 37859 (KR)**
   • **KIM, Yunsu**
     **Pohang-si, Gyeongsangbuk-do 37859 (KR)**

(74) Representative: **Meissner Bolte Partnerschaft
   mbB**
   **Patentanwälte Rechtsanwälte**
   **Postfach 86 06 24**
   **81633 München (DE)**

(54) **NON-ORIENTED ELECTRICAL STEEL SHEET AND METHOD FOR MANUFACTURING SAME**

(57)   A method for manufacturing a non-oriented electrical steel sheet according to one embodiment of the present invention comprises: a step of manufacturing a slab in a steelmaking process by inputting, in weight %, In: 0.0005-0.015%, Sn: 0.0050-0.08%, Sb: 0.0050-0.05%, and P: 0.0050-0.06% into basic components, Si: 2.8-3.8%, Al: 0.5-1.5%, Mn: 0.3-2.0%, Cu: 0.01-0.2%, and Cr: 0.01-0.5%, and controlling Mg: 0.002-0.05%; a slab heating step of heating the slab; a hot rolling step of final finishing rolling the slab; a hot-rolled sheet annealing step of annealing a hot-rolled sheet; a cold rolling step of rolling the hot-rolled sheet; and a final annealing step of annealing a cold-rolled sheet.

EP 4 455 347 A1

**Description**

**[Technical Field]**

An exemplary embodiment of the present disclosure relates to a non-oriented electrical steel sheet and a method for manufacturing the same. Particularly, an exemplary embodiment of the present disclosure relates to a non-oriented electrical steel sheet by adding a component for increasing resistivity and a component for improving texture to a steel sheet and also controlling process conditions so that both strength and iron loss of the steel sheet are excellent, and a method for manufacturing the same.

**[Background Art]**

Recently, global interest and efforts for carbon neutrality are increasing, for the conservation of the global environment due to climate change.

Regarding the carbon neutrality, efficient use of electrical energy has become a big issue, for improving the global environment such as energy saving, reduction of fine dust produced, and greenhouse gas reduction.

Since 50% or more of the total electrical energy currently generated is consumed by an electric motor, increased efficiency of an electric motor is definitely needed for efficient use of electricity.

Recently, as the eco-friendly automobile (hybrid, plug-in hybrid, electric vehicle, fuel cell vehicle) field develops rapidly, interest in high-efficiency drive motors is growing rapidly.

Electrification of cars which is centered on electric vehicles and progresses rapidly is focusing on enhancing the characteristics of drive motors.

The characteristics required for the drive motor for an electric vehicle are further increasing a mileage and also increasing a top speed simultaneously. The goals are directly related to low iron loss and high strength characteristics of an electrical steel sheet used in the drive motors. When a yield strength of the electrical steel sheet is high, the rotation number of the driving motor may be high, iron loss is low, and efficiency is better, so that a mileage may be further increased.

Therefore, the increased strength and the high-frequency low iron loss characteristics of the electrical steel sheet are essential, and to this end, efforts are being made by including more Si in the electrical steel sheet than a common content of Si, and adding large amounts of Al, Mn, and Cr to secure both the high-frequency low iron loss and high strength.

However, there are limits to satisfying the limit top speed characteristics and the long-distance driving characteristics of the drive motor, which are increased day by day, only by a method of increasing strength by adding large amounts of resistivity elements such as Si, Al, Mn, and Cr to the electrical steel sheet and decreasing a grain diameter, and also, there are limits to improving the physical properties of the electrical steel sheet. Therefore, there is a growing need to improve the characteristics of the material itself by changing the structure in the material of a non-oriented electrical steel sheet for an electric vehicle drive motor.

**[Disclosure]**

**[Technical Problem]**

The present disclosure attempts to provide a non-oriented electrical steel sheet and a method for manufacturing the same. Specifically, an exemplary embodiment of the present disclosure attempts to provide a non-oriented electrical steel sheet which has both excellent strength and iron loss by adding Si, Al, Mn, Cu, and Cr components for increasing resistivity and In, Sn, Sb, P, and Mg components for improving texture and also controlling process conditions, and a method for manufacturing the same.

**[Technical Solution]**

An exemplary embodiment of the present disclosure provides a non-oriented electrical steel sheet including, by weight: 2.8 to 3.8% of Si, 0.5 to 1.5% of Al, 0.3 to 2.0% of Mn, 0.01 to 0.2% of Cu, and 0.01 to 0.5% of Cr components, and 0.0005 to 0.015% of In, 0.0050 to 0.08% of Sn, 0.0050 to 0.05% of Sb, 0.0050 to 0.06% of P, and 0.002 to 0.05% of Mg, with a balance of Fe and other inevitable impurities.

The non-oriented electrical steel sheet according to an exemplary embodiment of the present disclosure may have contents of In, Sn, Sb, P, and Mg and a crystal grain size which satisfy the relationship of the following [Equation 1]:

[Equation 1]

$$[Mg] \leq ([In]*[Sn])/([Sb]*[P]) \leq \text{grain diameter (mm)}*20.$$

The non-oriented electrical steel sheet according to an exemplary embodiment of the present disclosure may further include one or more of 0.0040% or less of C (excluding 0%), 0.0040% or less of S (excluding 0%), 0.0040% or less of N (excluding 0%), and 0.0040% or less of Ti (excluding 0%).

The non-oriented electrical steel sheet according to an exemplary embodiment of the present disclosure may have a resistivity of 50 $\mu\Omega\cdot$cm or more.

The non-oriented electrical steel sheet according to an exemplary embodiment of the present disclosure may have a ND//<114> texture fraction of 5% or more.

It is preferred that the non-oriented electrical steel sheet according to an exemplary embodiment of the present disclosure satisfies the following [Equation 2] related to yield strength by crystal orientation:

[Equation 2]

$$Ys (RD*10.3) \leq Ys (45°) \leq Ys (TD).$$

Another exemplary embodiment of the present disclosure provides a method for manufacturing a non-oriented electrical steel sheet including: in a steelmaking process, manufacturing a slab by adding, by weight, 0.0005 to 0.015% of In, 0.0050 to 0.08% of Sn, 0.0050 to 0.05% of Sb, and 0.0050 to 0.06% of P to 2.8 to 3.8% of Si, 0.5 to 1.5% of Al, 0.3 to 2.0% of Mn, 0.01 to 0.2% of Cu, and 0.01 to 0.5% of Cr as basic components, and controlling Mg to a range of 0.002 to 0.05%; slab heating of heating the slab; hot rolling of finally finish rolling the slab at 800°C or higher; hot-rolled sheet annealing of annealing the hot-rolled sheet; cold rolling of rolling the hot-rolled sheet at a reduction rate of 70 to 95%; and final annealing of annealing the cold-rolled sheet at 800 to 1,000°C.

The method for manufacturing a non-oriented electrical steel sheet according to an exemplary embodiment of the present disclosure may satisfy the following [Equation 1]:

[Equation 1]

$$[Mg] \leq ([In]*[Sn])/([Sb]*[P]) \leq \text{grain diameter (mm)}*20.$$

The method for manufacturing a non-oriented electrical steel sheet according to an exemplary embodiment of the present disclosure may further include one or more of 0.0040% or less (excluding 0%) of C, 0.0040% or less (excluding 0%) of S, 0.0040% or less (excluding 0%) of N, and 0.0040% or less (excluding 0%) of Ti.

In the method for manufacturing a non-oriented electrical steel sheet according to an exemplary embodiment of the present disclosure, it is preferred that the electrical steel sheet has a resistivity of 50 $\mu\Omega\cdot$cm or more or a ND//<1 14> texture fraction of 5% or more, or satisfies any one or more of conditions of the following [Equation 2] related to yield strength:

[Equation 2]

$$Ys (RD*1.03) \leq Ys 45° \leq Ys (TD).$$

In the method for manufacturing a non-oriented electrical steel sheet according to an exemplary embodiment of the present disclosure, the slab may be heated at 1100 to 1,250°C.

In the method for manufacturing a non-oriented electrical steel sheet according to an exemplary embodiment of the present disclosure, the hot-rolled sheet may be annealed at 850 to 1,150°C.

[Advantageous Effects]

The non-oriented electrical steel sheet according to an exemplary embodiment of the present disclosure may provide an excellent non-oriented electrical steel sheet for an electric vehicle drive motor having both increased yield strength and iron loss by deriving an optimal component ratio depending on a grain diameter by controlling manufacturing process conditions in a state of including Si, Al, Mn, Cu, and Cr for increasing resistivity as base components, adding In, Sn, Sb, and P for promoting segregation, and also adding Mg for hindering segregation.

The non-oriented electrical steel sheet according to an exemplary embodiment of the present disclosure has further increased yield strength as the electrical steel sheet moves from a rolling direction to a rolling vertical direction and is improved more appropriately, and simultaneously, implements a technical effect to provide excellent iron loss.

When the non-oriented electrical steel sheet according to an exemplary embodiment of the present disclosure is manufactured into a drive motor, it allows driving of a motor with less current even during high-speed rotation and has excellent motor efficiency.

Eventually, the non-oriented electrical steel sheet according to an exemplary embodiment of the present disclosure contributes to the manufacture of motors for eco-friendly automobiles, motors for high-efficiency home appliances, and super premium grade motors.

**[Mode for Invention]**

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

In addition, unless otherwise particularly stated, % refers to wt%, and 1 ppm refers to 0.0001 wt%.

In an exemplary embodiment of the present disclosure, the meaning of further including an additional element is replacing iron (Fe) as a balance by the addition amount.

Hereinafter, an exemplary embodiment of the present disclosure will be described in detail so that a person with ordinary skill in the art to which the present disclosure pertains may easily carry out the present disclosure. As those skilled in the art would realize, the described embodiments may be modified in various different ways, all without departing from the spirit or scope of the present disclosure.

In an exemplary embodiment of the present disclosure, Si, Al, Mn, Cu, and Cr components for increasing resistivity are efficiently controlled, and also In, Sn, Sb, and P components for promoting segregation and a Mg component for hindering segregation are also controlled together in a non-oriented steel sheet, thereby changing texture to improve both yield strength and iron loss.

The non-oriented electrical steel sheet according to an exemplary embodiment includes, by weight: 2.8 to 3.8% of Si, 0.5 to 1.5% of Al, 0.3 to 2.0% of Mn, 0.01 to 0.2% of Cu, and 0.01 to 0.5% of Cr components, and 0.0005 to 0.015% of In, 0.0050 to 0.08% of Sn, 0.0050 to 0.05% of Sb, 0.0050 to 0.06% of P, and 0.002 to 0.05% of Mg, with a balance of Fe and other inevitable impurities.

First, reasons for limiting the components of the non-oriented electrical steel sheet will be described.

[Si: 2.8 to 3.8 wt%]

Since Silicon (Si) serves to secure high strength while lowering iron loss by increasing resistivity of a material, it should be added in a large amount. When Si is added too little, a high-frequency iron loss improvement effect may not be expected and it is insufficient for securing strength, and when Si is added too much, hardness of a material is increased to deteriorate productivity and punching properties, which is thus not preferred. Therefore, Si may be included at 2.8 to 3.8 wt%.

[Al: 0.5 to 1.5 wt%]

Aluminum (Al) serves to increase resistivity of a material to lower iron loss and also secure high strength. When Al is added too little, it is not effective for reducing high-frequency iron loss and securing high strength and nitrides are finely formed, which may reduce magnetism. In contrast, when Al is added too much, the physical properties of a mold flux are changed in a process such as steelmaking and continuous casting, thereby greatly deteriorating productivity. Therefore, Al may be added in the range described above. More specifically, Al may be included at 0.3 to 2.0 wt%.

[Mn: 0.3 to 2.0 wt%]

Manganese (Mn) serves to increase resistivity of a material to improve iron loss and form a sulfide. When Mn is added too little, MnS is finely precipitated to deteriorate magnetism. In contrast, when Mn is added too much, formation of {111} texture which is unfavorable to magnetism is promoted to decrease magnetic flux density. Therefore, it is preferred that Mn is included at 0.3 to 2.0 wt%.

[Cu: 0.01 to 0.2wt%]

Copper (Cu) serves to form a sulfide with manganese (Mn). When Cu is added too little, CuMnS may be finely precipitated to deteriorate magnetism. In contrast, when Cu is added too much, high temperature brittleness occurs, so that cracks may be formed on the steel sheet in continuous casting or hot rolling process. Therefore, it is preferred that Cu is included at 0.01 to 0.2 wt%.

[Cr: 0.01 to 0.50 wt%]

Chromium (Cr) serves to increase resistivity of a material to lower iron loss. When Cr is included too little, there is no resistivity improvement effect, and when Cr is added too much, magnetic flux density is decreased to deteriorate magnetic properties. Therefore, it is preferred that Cr is included at 0.01 to 0.50 wt%.

[Addition amounts of In, Sn, Sb, and P]

Indium (In), tin (Sn), antimony (Sb), and phosphorus (P) may be segregated into a crystal grain boundary by appropriately controlling annealing conditions. Concentrations of the components for obtaining a grain boundary segregation effect by adding In, Sn, Sb, and P are preferably 0.0005 to 0.015% of In, 0.0050 to 0.08% of Sn, 0.0050 to 0.05% of Sb, and 0.0050 to 0.06% of P. Each element of In, Sn, Sb, and P has no grain boundary segregation effect below the range of the amount added, and increases brittleness of the material above the range. Therefore, it is preferred to limit the range described above.

[Mg: 0.002 to 0.1 wt%]

Magnesium (Mg) serves to form a sulfide coarsely to improve iron loss. When Mg is added too little, it may not serve well and form a fine sulfide to deteriorate magnetism. In contrast, when Mg is added too much, Mg remains without forming the sulfide and deteriorates iron loss.
Further, even within a range of Mg added, if necessary, Mg may form a compound with segregation elements to deteriorate magnetism.
Therefore, though an addition amount of Mg is within the addition range, it is preferred to control so that Mg is added in an amount less than the ([In]*[Sn])/([Sb]*[P]) value as in the following [Equation 1]:

[Equation 1]

$$[Mg] \le ([In]*[Sn])/([Sb]*[P]) \le \text{grain diameter (mm)}*20.$$

The meaning of Equation 1 is appropriately adjusting elements which promotes segregation and an element which hinders segregation, in order to control addition amounts of segregation elements to maximize a segregation effect. Therefore, since Mg has an ability to bond to a segregation element to form an intermetallic compound, it is preferred to limit the amount to a range of $[Mg] \le ([In]*[Sn])/([Sb]*[P])$.
When the addition amount of Mg is included so much that it goes beyond the range of [Equation 1], there is no segregation effect, and it is not easy to express magnetism and strength improvement effects as expected.

Further, when crystal grain boundary segregation is formed by adding segregation elements, a crystal grain size, that is, a grain diameter of the steel sheet is affected. That is, the grain diameter of the steel sheet is coarsened, a segregation amount is decreased to eliminate a segregation effect, and thus, it is preferred to control the content of segregation elements within the range of [Equation 1] related to the grain diameter. As such, when the grain diameter grows larger than the relation formula of the addition amount of other segregation elements according to [Equation 1], it is not easy to expect the segregation effect.

The non-oriented electrical steel sheet according to an exemplary embodiment may further include one or more of 0.0040% or less (excluding 0%) of C, 0.0040% or less (excluding 0%) of S, 0.0040% or less (excluding 0%) of N, and 0.0040% or less (excluding 0%) of Ti. When the additional element is further included, it may replace Fe as a balance.

Herein, since C, N, and Ti serve to form a carbonitride to hinder magnetic domain movement, it is preferred to limit them within the range, and since S forms a sulfide to deteriorate crystal grain growth, it is preferred to limit them within the range for this reason.

The non-oriented electrical steel sheet according to an exemplary embodiment of the present disclosure may further include elements which are inevitably included in addition to the components described above.

The inevitable impurities refer to impurities which are intentionally added or inevitably incorporated in steelmaking and a manufacturing process of a non-oriented electrical steel sheet. Since the inevitable impurities are well known, detailed description thereof will be omitted. In addition, addition of elements other than the alloy components described above is not excluded in an exemplary embodiment of the present disclosure, and various elements may be included within a range where the technical idea of the present disclosure is not impaired. When the additional element is further included, it replaces Fe as a balance.

[Resistivity: 50 $\mu\Omega\cdot$cm or more]

The resistivity of the steel sheet is a value calculated from 13.25 + 11.3x([Si]+[Al]+[Mn]/2+[Cu]/2+[Cr]/2). Herein, [Si], [Al], [Mn], [Cu], and [Cr] are contents (wt%) of Si, Al, Mn, Cu, and Cr, respectively. A higher resistivity serves to lower iron loss. When the resistivity is too low, iron loss is poor, so that it is difficult to use the steel sheet as a high efficiency motor, and when the resistivity is too high, magnetic flux density may be poor. The resistivity for use as a motor for high-speed rotation needs to be controlled to 50 $\mu\Omega\cdot$cm or more.

[ND//<114> fraction: 5% or more]

In an exemplary embodiment of the present disclosure, the fraction of the texture to a <114> direction (ND//<114> fraction) which is developed in a vertical thickness direction (ND) to a rolling direction of a steel sheet may be 5% or more.

The ND//<114> fraction of the steel sheet was investigated within a tolerance angle of 5° using SEM-EBSD. Since a Young's modulus in a rolling direction (RD) and a direction vertical to a rolled surface (TD) is large, when the orientation is increased, the yield strength of Ys (TD$\pm\alpha$) is increased as compared with the yield strength in a rolling direction Ys (RD).

When segregation often occurs, the ND//<114> fraction is 5% or more, and the characteristics of Ys (RD) < Ys (TD$\pm\alpha$) is secured. Herein, the $\alpha$ value is in a range of 5 - 90°.

[Yield strength: Ys]

In an exemplary embodiment of the present disclosure, the yield strength according to each crystal orientation of the steel sheet satisfies the following [Equation 2]:

[Equation 2]

$$Ys\ (RD * 1.03) \leq Ys\ (45°) \leq Ys\ (TD).$$

The yield strength of the steel sheet was measured by a tensile test, and in order to exclude the effect of a strain rate, a 2% off-set strength was used. In [Equation 2], Ys (RD) is a yield strength in a rolling direction, a value obtained by multiplying this by the exponent 1.03 is a comparison target, and Ys (TD) is a yield strength in a direction vertical to a rolled surface. In addition, a yield strength in a direction tilted at 45° from the rolling direction is expressed as Ys (45°).

In an exemplary embodiment of the present disclosure, when the yield strength of the steel sheet satisfies the conditions of [Equation 2], iron loss is improved.

Hereinafter, a method for manufacturing a non-oriented electrical steel sheet according to an exemplary embodiment of the present disclosure will be described.

The method for manufacturing a non-oriented electrical steel sheet according to an exemplary embodiment of the present disclosure includes: in a steelmaking process, manufacturing a slab by adding, by weight, 0.0005 to 0.015% of In, 0.0050 to 0.08% of Sn, 0.0050 to 0.05% of Sb, and 0.0050 to 0.06% of P to 2.8 to 3.8% of Si, 0.5 to 1.5% of Al, 0.3 to 2.0% of Mn, 0.01 to 0.2% of Cu, and 0.01 to 0.5% of Cr as basic components, and controlling Mg to a range of 0.002 to 0.05%; heating the slab; hot rolling the slab to manufacture a hot-rolled sheet; cold rolling the hot-rolled sheet to manufacture a cold-rolled sheet; and finally annealing the cold-rolled sheet.

The non-oriented electrical steel sheet manufactured by the method satisfies the following [Equation 1]:

$$[\text{Equation 1}]$$

$$[Mg] \le ([In]*[Sn])/([Sb]*[P]) \le \text{grain diameter (mm)}*20.$$

Hereinafter, each step will be described in detail.

First, manufacturing of a slab will be described. Since the reasons for limiting the component elements in the slab are the same as the reasons for limiting the composition of the non-oriented electrical steel sheet described above, repeated description will be omitted. Since the composition of the slab in the manufacturing processes such as hot rolling, hot-rolled sheet annealing, cold rolling, and final annealing described later is not substantially changed, the composition of the slab and the composition of the non-oriented electrical steel sheet are substantially the same.

The slab may be heated before the manufacturing of a hot-rolled sheet. Specifically, the slab is charged into a heating furnace and heated to 1,100 to 1,250°C. When it is heated at a temperature higher than 1,250°C, precipitates are redissolved and may be finely precipitated after hot rolling.

The heated slab may be hot-rolled to 2 to 2.3 mm and manufactured into a hot-rolled sheet. In the manufacturing of a hot-rolled sheet, a final finish rolling temperature may be 800°C or higher.

After the manufacturing of a hot-rolled sheet, hot-rolled sheet annealing of the hot-rolled sheet may be further included. Herein, the hot-rolled sheet annealing temperature may be 850 to 1,150°C. When the hot-rolled sheet annealing temperature is lower than 850°C, a structure does not grow or finely grows, so that a magnetic flux density increase effect is small, and when the annealing temperature is higher than 1,150°C, magnetic characteristics are rather deteriorated and rolling workability may become poor due to sheet shape deformation. More specifically, the temperature range may be 950 to 1,125°C. The hot-rolled sheet annealing is performed for increasing an orientation favorable to magnetism, if necessary, and may be omitted.

Next, the hot-rolled sheet is pickled and cold-rolled to a predetermined thickness. The rate is differently applied depending on a hot-rolled sheet thickness, but cold rolling may be performed by applying a reduction rate of 70 to 95% so that the final thickness is 0.2 to 0.65 mm. In order to match the reduction rate, cold rolling two times or more with one cold rolling or intermediate annealing interposed therebetween may be performed.

In the manufacturing of a cold-rolled sheet, a maximum rolling speed may be 10 m/s or more.

The sheet after final cold rolling is finally annealed. In the final annealing, the sheet may crack at 800 to 1,000°C. For optimization of grain boundary segregation, a lower annealing temperature is better, but when a sheet thickness is thin, the annealing temperature should be raised. When a crack zone temperature is lower than 800°C, recrystallization does not sufficiently occur, and when a final annealing temperature is higher than 1,000°C, a segregation effect disappears.

During cooling after cracking, cooling may be performed at a cooling rate of 10 to 40°C/s to 700°C after the cracking temperature. The cooling speed is adjusted within a range where high-frequency iron loss is not inferior by too much growth of the grain diameter. More specifically, the cooling may be performed at a speed of 15 to 35°C/s.

Thereafter, forming an insulation layer may be further included. Since a method for forming an insulation layer is well known in the art of the non-oriented electrical steel sheet, detailed description will be omitted.

The following examples illustrate the present disclosure in more detail. However, the following examples are only a preferred example of the present disclosure, and the present disclosure is not limited to the following examples.

Example 1

Slabs having the compositions as shown in the following Table 1 were manufactured. The components were controlled to those described in Table 1 and a balance was Fe. The slabs were heated to 1,150°C and finish hot-rolled at 850°C to manufacture hot-rolled sheets having a thickness of 2.0 mm. The sheets after hot rolling were annealed at 1,100°C for 4 minutes and then pickled.

Next, the sheets were cold rolled at a reduction rate of 87.5% to make the thickness 0.25 mm, and then finally annealed. The final annealing was performed at 950°C for 3 minutes.

The resistivity values calculated from component source of the steel sheets, the crystal grain sizes measured by an area method, the ND//<114> fractions, and the yield strengths by each direction of the texture were measured, respectively, for the non-oriented electrical steel sheets manufactured as such, and are shown in the following Table 2.

The texture was measured using SEM-EBSD, the texture was within a tolerance angle of 5°, and the yield strength was calculated from a 2% off-set strength.

(Table 1)

| Steel type | Si (wt %) | Al (wt %) | M (wt %) | C ppm | S ppm | N ppm | Ti ppm | Cu (wt %) | Cr (wt %) | In ppm | P ppm | Sn ppm | Sb ppm | (In*Sn)/(Sb*P) | Mg ppm |
|---|---|---|---|---|---|---|---|---|---|---|---|---|---|---|---|
| 1 | 2.8 | 0.7 | 1 | 25 | 24 | 17 | 15 | 0.05 | 0.4 | 50 | 100 | 300 | 100 | 1.5 | 100 |
| 2 | 2.8 | 1.2 | 1.5 | 21 | 22 | 13 | 10 | 0.07 | 0.2 | 5 | 100 | 50 | 50 | 0.05 | 170 |
| 3 | 2.8 | 0.3 | 0.3 | 28 | 14 | 12 | 13 | 0.15 | 0.2 | 30 | 200 | 300 | 35 | 1.29 | 500 |
| 4 | 3.6 | 1.3 | 1 | 15 | 17 | 15 | 5 | 0.15 | 0.5 | 55 | 500 | 100 | 500 | 0.02 | 250 |
| 5 | 3.2 | 0.9 | 1.4 | 18 | 22 | 17 | 18 | 0.15 | 0.08 | 35 | 100 | 100 | 100 | 0.35 | 250 |
| 6 | 3.1 | 1.5 | 1.5 | 15 | 24 | 17 | 22 | 0.2 | 0.005 | 7 | 50 | 100 | 100 | 0.14 | 300 |
| 7 | 3.6 | 0.5 | 1.1 | 17 | 28 | 15 | 22 | 0.05 | 0.08 | 30 | 60 | 800 | 600 | 0.67 | 100 |
| 8 | 3.8 | 0.5 | 0.3 | 22 | 15 | 22 | 15 | 0.07 | 0.08 | 5 | 100 | 600 | 400 | 0.08 | 150 |
| 9 | 3.1 | 0.6 | 0.5 | 28 | 15 | 25 | 11 | 0.07 | 0.08 | 3 | 30 | 300 | 300 | 0.10 | 400 |
| 10 | 3.6 | 0.8 | 0.8 | 21 | 11 | 28 | 9 | 0.07 | 0.08 | 45 | 250 | 10 | 800 | 0.002 | 15 |
| 11 | 3.3 | 0.6 | 0.6 | 20 | 14 | 17 | 15 | 0.07 | 0.08 | 200 | 200 | 200 | 10 | 20.00 | 80 |
| 12 | 3.3 | 0.6 | 0.7 | 24 | 19 | 16 | 21 | 0.008 | 0.0 | 78 | 60 | 60 | 60 | 0.12 | 120 |
| 13 | 3.3 | 0.6 | 1.2 | 17 | 12 | 11 | 19 | 0.09 | 0.08 | 7 | 60 | 300 | 300 | 0.12 | 10 |

(Table 2)

| Steel type | Resistivity (μΩ·cm) | Grain diameter (mm) | ND//<114> fraction (%) | Ys (RD) | Ys (RD*1.03) | Ys (45°) | Ys (TD) | W10/400 | Remarks |
|---|---|---|---|---|---|---|---|---|---|
| 1 | 61 | 0.1050 | 7.5 | 450 | 464 | 465 | 476 | 11.5 | Example |
| 2 | 68 | 0.075 | 3.3 | 460 | 474 | 463 | 468 | 12.4 | Comparative Example |
| 3 | 52 | 0.0850 | 8.3 | 445 | 458 | 462 | 469 | 11.8 | Example |
| 4 | 78 | 0.0820 | 2.6 | 501 | 516 | 804 | 508 | 12.3 | Comparative Example |
| 5 | 69 | 0.0620 | 6.9 | 472 | 486 | 489 | 499 | 11.2 | Example |
| 6 | 75 | 0.1010 | 5.2 | 461 | 475 | 463 | 465 | 12.4 | Comparative Example |
| 7 | 67 | 0.0750 | 8.6 | 498 | 513 | 515 | 525 | 11.4 | Example |
| 8 | 64 | 0.0780 | 4.2 | 512 | 527 | 514 | 520 | 12.6 | Comparative Example |
| 9 | 59 | 0.0620 | 3.3 | 455 | 469 | 458 | 462 | 12.8 | Comparative Example |
| 10 | 68 | 0.0630 | 2.9 | 498 | 513 | 501 | 506 | 12.9 | Comparative Example |
| 11 | 62 | 0.0620 | 4.8 | 470 | 484 | 471 | 472 | 12.7 | Comparative Example |
| 12 | 62 | 0.0890 | 5.7 | 475 | 489 | 477 | 479 | 12.6 | Comparative Example |
| 13 | 65 | 0.1100 | 3.1 | 478 | 492 | 481 | 485 | 12.7 | Comparative Example |

As shown in Table 1 and Table 2, it was confirmed that since the examples satisfying the alloy components and the manufacturing process conditions had a ND//<114> fraction of 5% or more, the yield strength increase ratio was increased by 3% or more as it deviated from a rolling direction, and iron loss was also excellent.

However, steel types 4, 10, and 13 which contained an Mg content more than the calculated ([In]*[Sn])/([Sb]*[P]) value had a ND//<114> fraction of 4% or less, and an insignificant segregation effect, and thus, also had an insignificant strength improvement effect for each direction.

Further, since steel types 1, 3, 5, and 7 satisfied the conditions of [Equation 1], it was shown that they satisfied all of the conditions of [Equation 2] related to yield strength by each direction and their iron loss was also sufficiently secured. In addition to that, it was shown that all of steel types 1, 3, 5, and 7 had a resistivity of 50 μΩ·cm or more and a ND//<114> fraction of 5% or more.

However, it was confirmed that steel types 2, 4, 6, and 8 to 13 which were out of the composition range of the present disclosure, or were within the composition range but did not satisfy the conditions of [Equation 1], had a ND//<114> fraction of 5% or less, or the yield strength values by each direction of their texture did not satisfy [Equation 2].

The present disclosure is not limited by the above exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrative and are not restrictive in all aspects.

Claims

1.    A non-oriented electrical steel sheet comprising, by weight: 2.8 to 3.8% of Si, 0.5 to 1.5% of Al, 0.3 to 2.0% of Mn, 0.01 to 0.2% of Cu, and 0.01 to 0.5% of Cr components, and 0.0005 to 0.015% of In, 0.0050 to 0.08% of Sn, 0.0050 to 0.05% of Sb, 0.0050 to 0.06% of P, and 0.002 to 0.05% of Mg, with a balance of Fe and other inevitable impurities.

2. The non-oriented electrical steel sheet of claim 1, wherein:
   contents of In, Sn, Sb, P, and Mg and a crystal grain size satisfy a relationship of the following [Equation 1]:

[Equation 1]

$$[Mg] \leq ([In]*[Sn])/([Sb]*[P]) \leq \text{grain diameter (mm)}*20.$$

3. The non-oriented electrical steel sheet of claim 1, further comprises:

   one or more of 0.0040% or less (excluding 0%) of C,
   0.0040% or less (excluding 0%) of S,
   0.0040% or less (excluding 0%) of N, and
   0.0040% or less (excluding 0%) of Ti.

4. The non-oriented electrical steel sheet of claim 1, wherein:
   the non-oriented electrical steel sheet has a resistivity of 50 $\mu\Omega\cdot$cm or more.

5. The non-oriented electrical steel sheet of claim 1, wherein:
   the non-oriented electrical steel sheet has a ND//<114> texture fraction of 5% or more.

6. The non-oriented electrical steel sheet of claim 1, wherein:
   the non-oriented electrical steel sheet satisfies the following [Equation 2] related to yield strength by crystal orientation:

[Equation 2]

$$Ys (RD*10.3) \leq Ys (45°) \leq Ys (TD).$$

7. A method for manufacturing a non-oriented electrical steel sheet, the method comprising: in a steelmaking process, manufacturing a slab by adding, by weight, 0.0005 to 0.015% of In, 0.0050 to 0.08% of Sn, 0.0050 to 0.05% of Sb, and 0.0050 to 0.06% of P to 2.8 to 3.8% of Si, 0.5 to 1.5% of Al, 0.3 to 2.0% of Mn, 0.01 to 0.2% of Cu, and 0.01 to 0.5% of Cr as basic components, and controlling Mg to a range of 0.002 to 0.05%;

   slab heating of heating the slab;
   hot rolling of finally finish rolling the slab at 800°C or higher;
   hot-rolled sheet annealing of annealing the hot-rolled sheet;
   cold rolling of rolling the hot-rolled sheet at a reduction rate of 70 to 95%; and
   final annealing of annealing the cold-rolled sheet at 800 to 1,000°C.

8. The method for manufacturing a non-oriented electrical steel sheet of claim 7, wherein:
   contents of In, Sn, Sb, P, and Mg and a crystal grain size of the non-oriented electrical steel sheet satisfy the following [Equation 1]:

[Equation 1]

$$[Mg] \leq ([In]*[Sn])/([Sb]*[P]) \leq \text{grain diameter (mm)}*20.$$

9. The method for manufacturing a non-oriented electrical steel sheet of claim 7, wherein:

   one or more of 0.0040% or less (excluding 0%) of C,
   0.0040% or less (excluding 0%) of S,
   0.0040% or less (excluding 0%) of N, and
   0.0040% or less (excluding 0%) of Ti are further included.

**10.** The method for manufacturing a non-oriented electrical steel sheet of claim 7, wherein:
the non-oriented electrical steel sheet has a resistivity of 50 $\mu\Omega\cdot$cm or more and a ND//<114> texture fraction of 5% or more, and satisfies any one or more of conditions of the following Equation 2 related to yield strength:

[Equation 2]

$$\text{Ys (RD*1.03)} \leq \text{Ys (45°)} \leq \text{Ys (TD)}.$$

**11.** The method for manufacturing a non-oriented electrical steel sheet of claim 7, wherein:

the slab heating is performed at 1,100 to 1,250°C.

**12.** The method for manufacturing a non-oriented electrical steel sheet of claim 7, wherein:
the hot-rolled sheet annealing is performed at 850 to 1,150°C.

# EP 4 455 347 A1

<table>
<tr><td colspan="2">INTERNATIONAL SEARCH REPORT</td><td colspan="2">International application No.<br>**PCT/KR2022/020772**</td></tr>
</table>

**A. CLASSIFICATION OF SUBJECT MATTER**

**C22C 38/38**(2006.01)i; **C22C 38/20**(2006.01)i; **C22C 38/28**(2006.01)i; **C22C 38/00**(2006.01)i; **C21D 8/12**(2006.01)i; **C21D 9/46**(2006.01)i; **H01F 1/147**(2006.01)i

According to International Patent Classification (IPC) or to both national classification and IPC

**B. FIELDS SEARCHED**

Minimum documentation searched (classification system followed by classification symbols)

C22C 38/38(2006.01); B21B 1/24(2006.01); B21B 3/02(2006.01); C21D 8/12(2006.01); C22C 38/00(2006.01); C22C 38/02(2006.01); C22C 38/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성(non-oriented), 전기강판(electrical steel sheet), 구리(Cu), 크롬(Cr), 인듐(In), 주석(Sn), 안티몬(Sb), 인(P), 마그네슘(Mg)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0071104 A (POSCO) 27 June 2018 (2018-06-27)<br>See paragraph [0065] and claims 1, 4, 8 and 12. | 1-12 |
| A | US 2017-0274432 A1 (JFE STEEL CORPORATION) 28 September 2017 (2017-09-28)<br>See paragraphs [0081] and [0086] and claims 1-2 and 6. | 1-12 |
| A | WO 2016-031178 A1 (JFE STEEL CORPORATION) 03 March 2016 (2016-03-03)<br>See claims 1-4. | 1-12 |
| A | CN 112143963 A (BAOSHAN IRON & STEEL CO., LTD.) 29 December 2020 (2020-12-29)<br>See claims 1-2. | 1-12 |
| A | KR 10-2021-0080726 A (POSCO) 01 July 2021 (2021-07-01)<br>See claims 1, 3-4 and 13. | 1-12 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 March 2023** | **24 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 455 347 A1

| | | INTERNATIONAL SEARCH REPORT | International application No. | |
|---|---|---|---|---|
| | | Information on patent family members | **PCT/KR2022/020772** | |

| Patent document cited in search report | | | Publication date (day/month/year) | Patent family member(s) | | | Publication date (day/month/year) |
|---|---|---|---|---|---|---|---|
| KR | 10-2018-0071104 | A | 27 June 2018 | CN | 110088327 | A | 02 August 2019 |
| | | | | CN | 110088327 | B | 17 June 2022 |
| | | | | EP | 3556883 | A1 | 23 October 2019 |
| | | | | EP | 3556883 | B1 | 09 February 2022 |
| | | | | JP | 2020-509184 | A | 26 March 2020 |
| | | | | JP | 6842546 | B2 | 17 March 2021 |
| | | | | KR | 10-1904309 | B1 | 04 October 2018 |
| | | | | US | 11111557 | B2 | 07 September 2021 |
| | | | | US | 2020-0087750 | A1 | 19 March 2020 |
| | | | | WO | 2018-117600 | A1 | 28 June 2018 |
| US | 2017-0274432 | A1 | 28 September 2017 | BR | 112017003067 | A2 | 21 November 2017 |
| | | | | BR | 112017003067 | B1 | 17 August 2021 |
| | | | | CN | 106574346 | A | 19 April 2017 |
| | | | | CN | 106574346 | B | 04 January 2019 |
| | | | | EP | 3187611 | A1 | 05 July 2017 |
| | | | | EP | 3187611 | B1 | 09 January 2019 |
| | | | | JP | 2016-047942 | A | 07 April 2016 |
| | | | | JP | 5975076 | B2 | 23 August 2016 |
| | | | | KR | 10-1921008 | B1 | 21 November 2018 |
| | | | | KR | 10-2017-0036047 | A | 31 March 2017 |
| | | | | MX | 2017002415 | A | 23 May 2017 |
| | | | | TW | 201610179 | A | 16 March 2016 |
| | | | | TW | I572723 | B | 01 March 2017 |
| | | | | WO | 2016-031178 | A1 | 03 March 2016 |
| WO | 2016-031178 | A1 | 03 March 2016 | BR | 112017003067 | A2 | 21 November 2017 |
| | | | | BR | 112017003067 | B1 | 17 August 2021 |
| | | | | CN | 106574346 | A | 19 April 2017 |
| | | | | CN | 106574346 | B | 04 January 2019 |
| | | | | EP | 3187611 | A1 | 05 July 2017 |
| | | | | EP | 3187611 | B1 | 09 January 2019 |
| | | | | JP | 2016-047942 | A | 07 April 2016 |
| | | | | JP | 5975076 | B2 | 23 August 2016 |
| | | | | KR | 10-1921008 | B1 | 21 November 2018 |
| | | | | KR | 10-2017-0036047 | A | 31 March 2017 |
| | | | | MX | 2017002415 | A | 23 May 2017 |
| | | | | TW | 201610179 | A | 16 March 2016 |
| | | | | TW | I572723 | B | 01 March 2017 |
| | | | | US | 2017-0274432 | A1 | 28 September 2017 |
| CN | 112143963 | A | 29 December 2020 | None | | | |
| KR | 10-2021-0080726 | A | 01 July 2021 | CN | 115176044 | A | 11 October 2022 |
| | | | | EP | 4079887 | A2 | 26 October 2022 |
| | | | | KR | 10-2325011 | B1 | 11 November 2021 |
| | | | | US | 2023-0025678 | A1 | 26 January 2023 |
| | | | | WO | 2021-125855 | A2 | 24 June 2021 |
| | | | | WO | 2021-125855 | A3 | 05 August 2021 |

Form PCT/ISA/210 (patent family annex) (July 2022)